# EUROPÄISCHE PATENTANMELDUNG

(11) **EP 1 168 874 A1**
(43) Veröffentlichungstag der Anmeldung: **02.01.2002**
(21) Anmeldenummer: 01115024.0
(22) Anmeldetag: 20.06.2001
(51) Int. Cl.: H04Q 7/38

(54) **Verfahren sowie Vorrichtung zur Positionsbestimmung von Teilnehmergeräten eines Funkkommunikationssystems**

(30) Priorität: 21.06.2000 DE 10038278; 27.06.2000 DE 10031178; 28.06.2000 DE 10031495
(71) Anmelder: SIEMENS AKTIENGESELLSCHAFT, 80333 München (DE)
(72) Erfinder: Bär, Siegfried, 75179 Pforzheim (DE); Hyung-Nam, Choi, 22117 Hamburg (DE); Gottschalk, Thomas, 38126 Braunschweig (DE); Kowalewski, Frank, Dr., 38228 Salzgitter (DE)

(57) **Zusammenfassung**

Verfahren zur Positionsbestimmung (PO1) mindestens eines Teilnehmergeräts (UE11) eines Funkkommunikationssystems (MCS), bei dem Nachrichtensignale (LS111) für ihre Übertragung nach einem Zeitmultiplexverfahren auf eine Vielzahl von aufeinanderfolgenden Zeitschlitzen (SL11 mit SL25) verteilt werden. Bei mindestens einem Zeitschlitz (SL11) wird derjenige Zeitbereich (MA), der für die Übertragung von Kanalschätzparametern vorbelegt ist, anstelledessen zum Senden und/oder Empfangen mindestens eines Messsignals (LCS1) auf der Übertragungsstrecke zwischen dem jeweilig zu ortenden Teilnehmergerät (UE11) und mindestens einer Basisstation (BS1), die der Aufenthalts-Funkzelle (CE1) des Teilnehmergeräts (UE11) benachbart ist, bereitgestellt.

## Beschreibung

Verfahren sowie Vorrichtung zur Positionsbestimmung von Teilnehmergeräten eines Funkkommunikationssystems

Im Funkkommunikationssystem wie z.B. nach dem GSM oder UMTS Standard kann es in der Praxis ggf. von Interresse sein, den aktuellen Standort bzw. Aufenthaltsort eines bestimmten Teilnehmergerätes, insbesondere Mobilfunkgeräts, zu bestimmen. Eine solche Positionsbestimmung könnte beispielsweise für die Routenplanung eines Kraftfahrzeuges oder sonstigen Transportfahrzeugs verwendet werden. Genauso könnte es ggf. auch für einen Netzbetreiber wünschenswert sein, z.B. zur Netzoptimierung, Netzsteuerung usw. zu ermitteln, an welchen Orten seines Funknetzes sich seine Teilnehmer aufhalten. Daneben können solche Standortanalysen für Polizei, Sicherheitsdienste, Rettungsdienste usw. ebenfalls von besonderem Interresse sein. Die Anforderungen an eine Positionsbestimmung des jeweiligen Teilnehmergerätes kann somit vom jeweiligen Teilnehmer selbst, als auch von der Netzinfrastrukturseite her kommen.

Der Erfindung liegt die Aufgabe zugrunde, einen Weg aufzuzeigen, wie bei einem Funkkommunikationssystem mit Zeitmultiplex-Übertragungsverfahren eine Positionsbestimmung des jeweiligen Teilnehmergerätes in einfacher sowie zuverlässiger Weise ermöglicht werden kann. Gemäß der Erfindung wird diese Aufgabe durch die Merkmale des Anspruchs 1 gelöst.

Dadurch, daß derjenige Zeitbereich bzw. Zeitabschnitt innerhalb eines Zeitschlitzes mit vorgegebener Zeitschlitzstruktur zum Senden und/oder Empfang mindestens eines Meßsignals bereit gestellt wird, und nicht diejenigen Zeitbereiche innerhalb der Zeitschlitzstruktur, die für die eigentliche Nutzdaten bzw. Nachrichtensignal-Übertragung festgelegt sind, sind Störungen bzw. Beeinträchtigungen des eigentlichen Kommunikationsverkehrs weitgehend vermieden. Unzulässig hohe Auswirkungen auf die ursprünglich bereitgestellte Funkzellenkapazität sind somitgehend weitgehend vermieden. Weiterhin ist es nicht erforderlich, zusätzliche Komponenten wie z.B. eine zusätzliche GPS-Einheit (Global-Positioning-System) in das jeweilige Teilnehmergerät zu dessen Positionsbestimmung zu integrieren. Die optionale Möglichkeit, im Bedarfsfall eine Positionsbestimmung des jeweiligen Teilnehmergerätes durchführen zu können, vermeidet also weitgehend allzugroße Änderungen in der Netzinfrastruktur sowohl hardware-mäßig als auch software-mäßig betrachtet. Die zusätzliche Implementierung der Positionsbestimmung eines bestimmten, gewünschten Teilnehmergerätes, das sich innerhalb der Netzstruktur aufhält, ist somit im Bedarfsfall in einfacher Weise ohne allzugroßen zusätzlichen Aufwand sowohl auf der Netzseite als auch im Teilnehmergerät selbst durchführbar.

Die Erfindung betrifft weiterhin eine Anordnung zur Durchführung des erfindungsgemäßen Verfahrens.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:
- Figur 1: in schematischer Darstellung ein Funkkommunikationssystem, insbesondere Mobilfunksystem,
- Figur 2: in schematischer Darstellung eine erfindungsgemäße Möglichkeit zur Bestimmung der örtlichen Lage eines Teilnehmergerätes innerhalb der Funkzellenstruktur des Funkkommunikationssystems nach Figur 1,
- Figur 3: in schematischer Darstellung die zeitliche Struktur eines Zeitrahmens als Abfolge einer Vielzahl von Zeitschlitzen bei der Zeitmultiplex-Übertragung von Nachrichtensignalen im Funkkommunikationssystem nach Figur 1,
- Figur 4: in schematischer Darstellung die Laufzeitverhältnisse eines Meßsignals in Relation zum Startzeitpunkts eines der Zeitschlitze der Zeitrahmenstruktur nach Figur 3, wobei das Meßsignal nach dem erfindungsgemäßen Verfahren im Funkkommunikationssystem von Figur 1 zu dem jeweils zu lokalisierenden Teilnehmergerät von mindestens einer Basisstation gesendet wird, die der Aufenthalts-Funkzelle dieses Teilnehmergeräts benachbart ist,
- Figuren 5,6: jeweils in schematischer Darstellung zwei verschiedene Zeitschlitz-Strukturen des TDD-Mode gemäß UMTS-Standart beim Zeitmultiplex- Übertragungsverfahrens des Funkkommunikationssystems nach Figur 1, und
- Figuren 7,8: jeweils in schematischer Darstellung die erfindungsgemäße Ausnutzung der vorgegebenen Zeitschlitzstrukturen nach den Figuren 5, 6 zur Durchführung des erfindungsgemäßen Verfahrens.

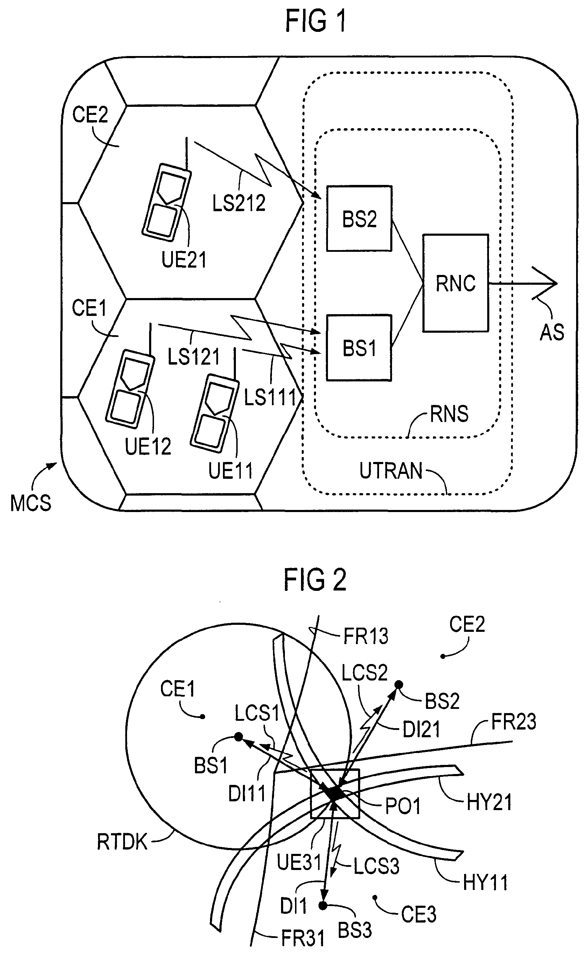

Elemente mit gleicher Funktion und Wirkungsweise sind in den Figuren 1 mit 8 jeweils mit denselben Bezugszeichen versehen.

Figur 1 zeigt in schematischer Darstellung ein Funkkommunikationssystem MCS, insbesondere Mobilfunksystem, daß eine Vielzahl von Basisstationen mit zugeordneten Funkzellen aufweist. Der zeichnerischen Übersichtheit halber sind in der Figur 1 lediglich 2 Funkzellen CE1, CE2 dieses Funkkommunikationssystems MCS jeweils als Sechseck angedeutet. Jeder Funkzelle wie z.B. CE1, CE2 ist dabei jeweils eine Basisstation wie z.B.

BS1, BS2 zugeordnet, d.h. der Funkbereich der jeweiligen Funkzelle wird jeweils durch eine bestimmte, zugeordnete Basisstation abgedeckt. Die jeweilige Basisstation ist vorzugsweise durch mindestens einen Funksender und mindestens einen Funkempfänger gebildet. Sie weist vorzugsweise mindestens eine Sendeantenne auf. Zusätzlich oder unabhängig zu ihrer Funktion, eine Funkverbindung zu Teilnehmergeräten des Funkkommunikationssystems MCS bereitzustellen, kann die jeweilige Basisstation jeweils für die Daten- Nachrichtenübermittlung zu einem etwaig vorhandenen Festnetz sorgen.

Im Funkkommunikationssystem MCS werden Nachrichtensignale über mindestens eine vordefinierte Luftschnittstelle zwischen mindestens einem Teilnehmergerät, insbesondere Mobilfunkgerät wie z.B. Handy und mindestens einer Basisstation, vorzugsweise nach einem Zeitmultiplex-Vielfachzugriffs- übertragungsverfahren übertragen. Es ist vorzugsweise als Mobilfunksystem nach dem UMTS-Standart (=Universal Mobile Telecommunication System) ausgebildet, insbesondere wird es im sogenannten TDD-Mode betrieben (TDD = Time Devision Duplex). Im TDD-Mode wird eine getrennte Signalübertragung in Up- und Down-Link-Richtung (Up-Link = Signalübertragung vom Mobilfunkgerät zur jeweiligen Basisstation, Down-Link = Signalübertragung von der jeweilig zugeordneten Basisstation zum Mobilfunkgerät) durch eine entsprechende separate Zuweisung von Zeitschlitzen mittels eines Zeitmultiplex-Verfahrens erreicht. Dabei wird nur eine einzige Trägerfrequenz zur Signalübertragung in Up-und Down-Link-Richtung zwischen dem jeweiligen Teilnehmergerät und seiner zugeordneten Basisstation verwendet. Mehrere Teilnehmer in derselben Funkzelle werden vorzugsweise über orthogonale Codes, insbesondere nach dem sogenannten CDMA-Verfahren (= Code Division Multiple Acces) getrennt. Als Teilnehmergeräte sind vorzugsweise Mobilfunktelefone, insbesondere Handys vorgesehen. Daneben können als Teilnehmergeräte auch sonstige Nachrichten und/oder Datenübertragungsgeräte wie z.B. Internet, Computer, Fernsehgeräte, Notebooks, Faxgeräte usw. mit zugeordneter Funkeinheit zum Kommunikationsverkehr "on-air", d.h. über mindestens eine Luftschnittstelle Komponenten des Funkkommunikationsnetzes sein. Die Teilnehmergeräte können dabei sowohl stationär, d.h. ortsfest im Funknetzt angeordnet sein, als sich auch mobil bzw. portabel, d.h. an wechselnden Orten, aufhalten.

Im aktuellen Funkverkehrszustand des Funkkommunikationssystems von Figur 1 halten sich in der Funkzelle CE1 beispielhaft die beiden Teilnehmergeräte UE11, UE12 auf. Da deren Aufenthaltsfunkzelle CE1 von der Basisstation BS1 aus bedient wird, wird bei Bedarf vom jeweiligen Teilnehmergerät UE11, UE12 zu dieser Basisstation BS1 jeweils eine Funkverbindung aufgebaut und über diese Lufttschnittsttelle kommuniziert. Die aktive Kommunikationsverbindung zwischen dem jeweiligen Teilnehmergerät UE11, UE12 in der Funkzelle CE1 zur Basisstation BS1 ist inder Figur 1 jeweils durch ein Funksignal LS11, LS121 angedeutet. In der benachbarten Funkzelle CE2 befindet sich in der Figur 1 beispielhaft ein einzelnes Teilnehmergerät UE21. Da dieser Funkzelle CE2 die Basisstation BS2 zugeordnet ist, wird bei Bedarf bzw. auf Anforderung eine Funkverbindung LS212 zwischen dem Teilnehmergerät und dieser Basisstation BS2 bereitgestellt. Die beiden Basissstationen BS1, BS2 stehen über Funk oder über Festleitungen mit dem sog. radio network controller zum Daten- Nachrichtenaustausch in Verbindung. Die Basisstationen und der radio network controller, der der Steuerung und Signalisierung im Funkkommunikations-netz dient, sind dabei im sog. radio network system RNS zusammengefasst. Dies ist in der Figur 1 durch einen punktierten Rahmen angedeutet. Der radio network controller RNC stellt insbesondere die Signalisierung zu Funktionsblöcken höherer Schichten im Funknetz her, was in Figur 1 durch einen Pfeil AS angedeutet ist. Das radio network system RNS bildet widerum eine Untereinheit im sog. Universal Terrestrial Radio-Access-Network UTRAN. Einzelheiten zum Schichtenaufbau eines UMTS-TDD-Mode-Funknetzes und dessen Funktionseinheiten sind insbesondere in den Spezifikationen 3G TS25.221: "Physical Channels and mapping of Transport Channels onto Physical Channels (TDD)", Version 3.2.0 (2000-03), 3G TS25.305: "Stage 2 funktional Specification of Location Services", Version 3.1.0 (2000-03), 3G TS25.224: "Physical Layer Procedures (TDD)" Version 3.2.0 (2000-03), 3G TS25.225: "Physical Layer-Measuremans TDD" Version 3.2.0 (2000-03) angegeben.

Figur 2 veranschaulicht, wie z.B. für ein Mobilfunkgerät UE31 dessen Ortsposition PO1 insbesondere im UMTS-TDD-Mode des Funkkommunikationssystems MCS ermittelt werden kann. In der Figur 2 sind drei Basisstationen BS1, BS2 sowie BS3 des Funkkommunikationssystems MCS eingezeichnet, denen jeweils Mobilfunkzellen CE1, CE2 sowie CE3 zugeordnet sind. Innerhalb der jeweiligen Funkzelle ist jeweils eine Basisstation für die Kommunikation mit dem sich dort jeweilig aufhaltenden Teilnehmergerät zuständig. Vorzugsweise ist die jeweilige Basisstation wie z.B. BS1 annäherungsweise im Zentrum der jeweiligen Funkzelle wie z.B. CE1 angeordnet. Die Grenzen dieser Funkversorgungsgebiete bzw. Funkzellen CE1 mit CE3 der Basisstationen BS1 mit BS3 sind in der Figur 2 durch Grenzlinien FR13, FR23, FR31 angedeutet. Im vorliegenden Ausführungsbeispiel wird der Einfachheit halber angenommen, daß an diesen Funkzellengrenzen der Übergang des Kommunikationsverkehrs jeweils insbesondere schlagartig erfolgt, d.h. es wird genau an den Grenzen der Funkzellen ein Wechsel der Zuständigkeit der Basisstationen (= handover) vorgenommen. Hier im Beispiel befindet sich in der Funkzelle CE3 als Teilnehmergerät des Funkkommunikationssystems MCS das Mobilfunkgerät UE31, insbesondere Handy, dessen örtliche Position z.B. für einen bestimmten Dienst, z.B. Routenplanung für ein Kraftfahrzeug bestimmt werden soll.

Das Funkkommunikationssystem MCS arbeitet vorzugsweise nach dem sog. UMTS-Standart (Universal Mobil Telecomunication System). Dabei werden Nachrichtensignale über mindestens eine Luftschnittstelle zwischen dem jeweiligen Teilnehmergerät, insbesondere Mobilfunkgerät und mindestens einer Basisstation in mindestens einer Funkzelle des Kommunikationssystems insbesondere nach einem kombinierten TDMA/CDMA Vielfachzugriffs-Übertragungsverfahren übertragen. Um dabei eine Teilnehmerseparierung vornehmen zu können, wird vereinfacht ausgedrückt bei der Funkübertragung über die Luftschnittstelle des jeweiligen Teilnehmergerätes zur zugeordneten Basisstation (und umgekehrt) eine zeitliche Aufteilung der Nachrichtensignale in eine Vielzahl von aufeinanderfolgenden Zeitschlitzen mit vorgebbarer Zeitdauer sowie mit vorgebbarer Zeitrahmenstruktur vorgenommen. Mehrere Teilnehmer, die zeitgleich in derselben Funkzelle mit der dortigen Basisstation in Kommunikation treten, werden in Kombination zur Zeitmultiplexaufteilung zweckmäßigerweise durch orthogonale Codes, insbesondere nach dem CDMA-Prinzip, voneinander hinsichtlich ihrer Nachrichten-/Datenverbindungen separiert. Detailierte Angaben zum CDMA-Verfahren sind dabei insbesondere in "CDMA For Wireless Personal Communications: R. Prasad: Artech House Publishers, London-Boston; ISBN 0-89006-571-3; 1996" angegeben.

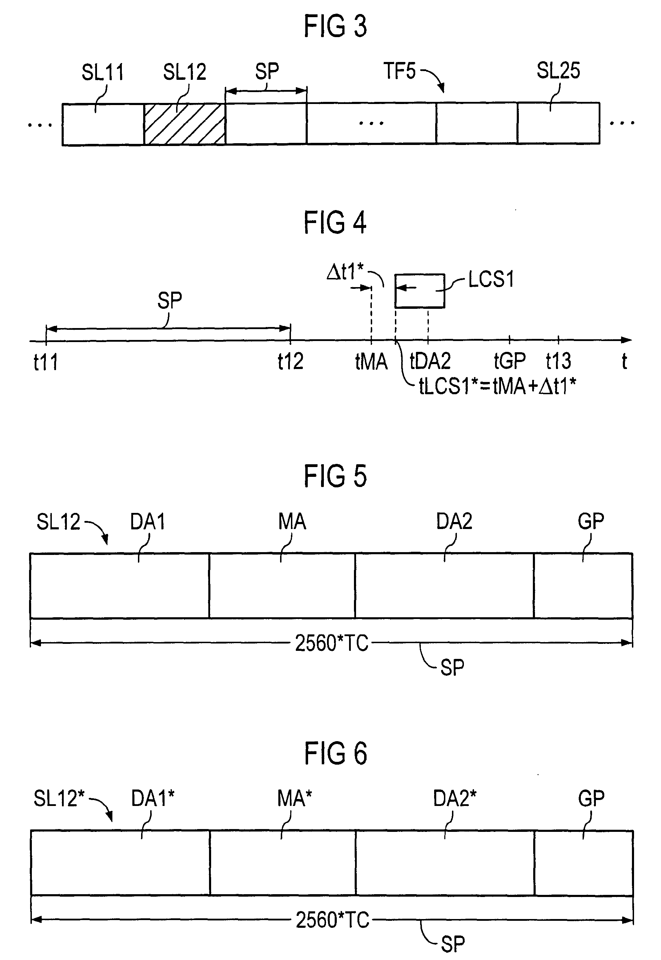

Figur 3 zeigt beispielhaft in schematischer Darstellung einen Zeitrahmen TF5 nach dem verwendeten Zeitmultiplexverfahren. Er weist eine Vielzahl von einzelnen, zeitlich nacheinanderfolgenden Zeitschlitzen SL11 mit SL25 von jeweils derselben konstanten Zeitdauer SP auf. Solche Zeitrahmen folgen dabei subzessive, d.h. fortlaufend bei der Nachrichtenübertragung aufeinander. Dies ist in der Figur 3 durch jeweils 3 Punkte am Anfang und Ende des Zeitrahmens TI5 angedeutet. Die Struktur des Zeitrahmens TI5 entspricht der Slot-Struktur eines sog. TDD-Frames (TDD= Time DivisionDuplex; Frame = Zeitrahmen). Ein TDD-Frame wie z.B. TI5 besteht dabei vorzugsweise insgesamt aus 15 Zeitschlitzen (= time slots) SL11 mit SL25. Dabei kann jeder Zeitschlitz eindeutig entweder für Übertragungen im Up-link oder Down-link Verkehr reserviert bzw. bereitgestellt sein. Diese Zeitrahmen bzw. Frames wiederholen sich dabei kontinuierlich. Beim UMTS-TTD-Mode wird die Nachrichtenübertragung vorzugsweise lediglich über eine einzige Trägerfrequenz vorgenommen. Durch Zuweisung von unterschiedlichen Zeitschlitzen erfolgt eine Trennung der Up- und Down-link Richtung für den Nachrichtenverkehr bzw. Nachrichtenverkehr bzw. Datenaustausch. Mehrere Teilnehmer die gleichzeitig auf die Netzresourcen zugreifen, d.h. gleichzeitig in derselben Funkzelle Nachrichtensignale senden und/oder empfangen sollen, werden dabei über sog. orthogonale Codes, vorzugsweise nach dem CDMA-Verfahren voneinander funktechnisch getrennt.

In der Figur 5 ist schematisch der zeitliche Aufbau bzw. die zeitliche Struktur, d.h. die zeitliche Unterteilung des jeweiligen Zeitschlitzes (= time slot) wie z.B. SL12 des Zeitrahmens TI5 von Figur 3 dargestellt. Der jeweilige Zeitschlitz wie z.B. SL12 weist vier Zeitabschnitte bzw. Zeitsektionen DA1, MA, DA2, GP auf, die für die Übertragung von verschiedenen Gruppen von Signaltypen reserviert sind. Der erste Zeitabschnitt DA1 des Zeitschlitzes SL11 ist für die Übertragung von Nutzdaten DA1, sogenannten data symbols, vorbelegt. Danach werden im zweiten, nachfolgenden Zeitabschnitt bzw.-Block MA sog. midambles übertragen. Dies sind Signale für die Kanalschätzung und/oder Synchronisation des jeweiligen Teilnehmergeräts und/oder der jeweiligen Basisstation. Aufgrund dieser Kanalschätzparameter wird insbesondere eine Kanalentzerrung im jeweiligen Mobilfunkgerät und/oder der jeweiligen Basisstation durchgeführt. Nach diesem Zeitblock MA folgt wiederum ein Zeitabschnitt DA2 für eine weitere Übertragung von Nutzdaten bzw. Nutzsignalen DA2. Dadurch, daß die midambles für die Kanalschätzung zwischen den beiden Blöcken mit den Nutzdaten bzw. Nutzsignalen übertragen werden, wird weitgehend sichergestellt, daß der jeweilige Funkkanal optimal im Zeitmittel entzerrt werden kann. Während des vierten, letzten Zeitabschnitts GP des Zeitschlitzes SL11 wird schließlich keine Signalübertragung vorgenommen, d.h. diese sog. guard period GP ist unbelegt, um eine Sicherheitszeitlücke bzw. Totzeit zwischen den einzelnen, zeitlich nacheinander übertragenen Zeitschlitzen zu haben. Dadurch werden insbesondere störende Signalüberlagerungen bzw. Interferenzen aufeinanderfolgender Slots durch Signallaufzeitunterschiede wie z.B. bei Mehrwegeausbreitung weitgehend vermieden, so daß eine einwandfreie Signalübertragung über die Luftschnittstelle weitegehend sichergestellt ist. Insgesamt betrachtet kann also während des jeweiligen Zeitschlitzes die Funkübertragung eines sog. Bursts (Datenbüschels) mit vorgegebener zeitlicher Aufteilung bzw. Sektionierung erfolgen. Detailierte Angaaben zur Zeitrahmen und Zeitschlitzstruktur sind im jeweiligene Mobilfunkstandard, hier im Ausführungsbeispiel insbesondere im UMTS-TDD Standard gemacht (z.B. 3G TS25.221 "Physical Channels and Mapping of Transport Channels onto Physical Channels (TDD)", Version 3.32.0 (2000-03), 3G TS25.3055 "Stagee 2 Functitonal Specification of Location services in UTRAN" Version 3.1.0 (2000-03), 3GTS25.224 "Physical Layer procedures (TDD)" Version 3.2.0 (2000-03).

Zur Erläuterung der erfindungsgemäßen Positionsbestimmung des jeweilig zu ortenden Teilnehmergeräts wird im vorliegenden Ausführungsbeispiel vereinfachend angenommen, daß die Zeit-schlitze des jeweiligen Zeitrahmens wie z.B. TF5 von Figur 5 auf die Down- und Uplink-Übertragung zweckmäßigerweise derart aufgeteilt sind, daß diese Zuordnung in allen Funkzellen CE1 mit CE3 gleich ist.

Den verschiedenen Sektionen DA1, DA2, MA, GP des jeweiligen Zeitschlitzes wie z.B. SL12 von Figurr 5 werden dabei im UMTS-TDD-Mode verschiedene Zeitdauern, d.h. Zeitlängen vorgegeben. In der Figur 5 weist beispielsweise die Sektion DA1 für die Nutzdatenübertragung eine solche Zeitdauer auf, daß Nutzdaten mittels 976 Chips übertragbar sind. Den Mitambles sind in der Zeitschlitzstruktur SL12 von Figur 5 512 Chips vorreserviert. Für die Übermittlung des zweiten Datenblocks DA2 sind wiederum 976 Chips wie beim ersten Datenblock DA1 vorgesehen. Der Guard period GP des Zeitschlitzes SL12 von Figur 5 sind schließlich 96 Chips für die Totzeitübertragung vorreserviert. Insgesamt weist der Zeitschlitz SL12 von Figur 5 somit eine Gesamtzeitdauer 2560 TC zur Übertragung von 2560 Chips auf, wobei TC die Zeitdauer zur Übertragung eines einzelnen Chips ist. Unter dem Begriff Chip wird dabei ein einzelnes Codierungssymbol verstanden, daß bei der Kanalcodierung durch Spreizcodes verwendet wird.

Neben diesem ersten Typ von TDD-Zeitschlitzstruktur von Figur 5 ist im UMTS-TDD-Mode noch ein zweiter Typ SL12* vorgesehen, der entsprechend Figur 6 eine andere zeitliche Sektionierung aufweist. Die Abfolge von einem ersten Datenblock DA1, sogenannten midambles MA zur Kanalschätzung und/oder Synchronisation, einem zweiten Datenblock DA2* und schließlich einer abschließenden Guard Period GP entspricht dabei der Zeitschlitzstruktur SL12 von Figur 5. Allerdings ist jetzt die zeitliche Länge dieser Übertragungsblöcke DA1*, MA*, DA2* gegenüber den Übertragungsblöcken DA1, MA, DA2 des Zeitschlitzes SL12 von Figur 5 modifiziert. Beim Zeitschlitztyp SL12* nach Figur 6 sind für die Übertragung des ersten Datenblockes DA1* 1104 Chips vorgesehen, d.h. mehr Chips als beim Zeitschlitztyp entsprechend SL12 von Figur 5. Dem Midamble-Block MA* des Zeitschlitzes SL12* von Figur 6 sind nun 256 Chips, d.h. nur lediglich die Hälfte des Midamble-Blocks MA des ersten Zeitschlitztyps SL12 von Figur 5 zugeordnet. Die Daten-bzw. Nutzsignale des zweiten Datenblockes DA2* des Zeit-schlitzes SL12* von Figur 6 werden wiederum mittels 1104 Chips wie beim ersten Datenblock DA1* übertragen. Der abschließenden Guard Period GP sind wie beim ersten Zeitschlitztyp von Figur 5 96 Chips zugeordnet.

Auf diese Weise weisen sowohl der erste als auch der zweite Zeitschlitztyp jeweils dieselbe Gesamtlänge von 2560 TC auf, wobei 2560 der Anzahl der übertragenen Chips entspricht, und TC die jeweilige Zeitdauer zur Übertragung eines einzelnen Chips entspricht.

Zusammenfassend betrachtet ist also beim jeweiligen Zeitschlitztyp sowohl ein erster Datenblock als auch ein zweiter Datenblock vorgesehen, die durch eine sog. Midamble-Sektion zeitlich voneinander getrennt sind. Die beiden Datenblöcke werden dabei mittels derselben Anzahl von Chips übertragen. Die beiden Zeitschlitzstrukturen unterscheiden sich allerdings durch die unterschiedliche Zuordnung von Chips für die Übertragung der Datenblöcke und Midambles. Während der erste Zeitschlitztyp für die Midambles 512 Chips vorsieht, sind dies beim zweiten Zeitschlitztyp lediglich nur noch die Hälfte von 256 Chips. Dafür stehen beim zweiten Zeitschlitztyp entsprechend Figur 6 für die jeweilige Datenübertragung im 1. und 2. Datenblock mehr Chips zur Verfügung.

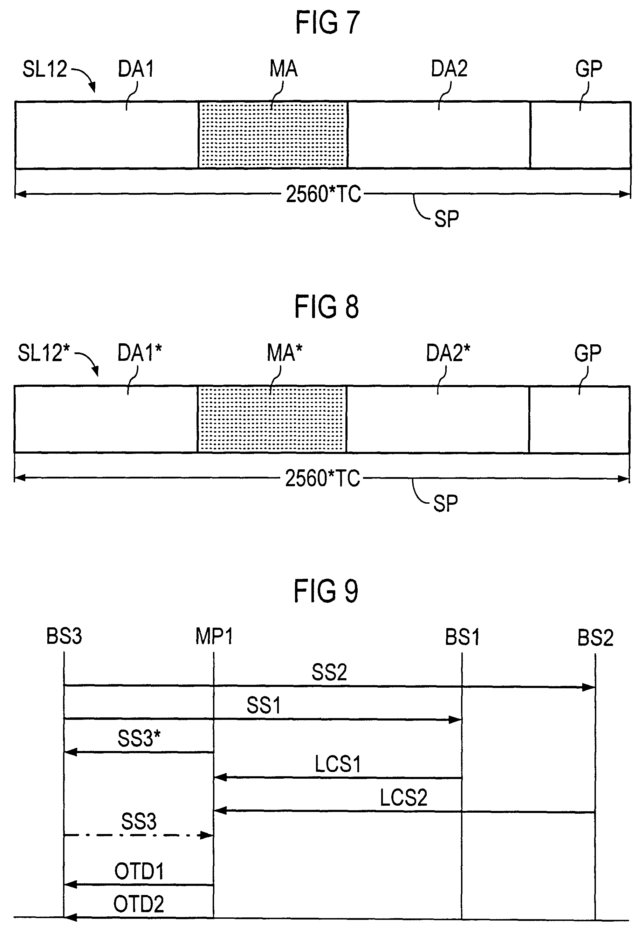

Nach einer ersten Variante kann die örtliche Lage bzw. Position des Mobilfunkgerätes UE31 von Figur 2 in vorteilhafter Weise beispielsweise mittels folgender Signalisierung über dessen Luftschnittstelle ermittelt werden. Das zugehörige Signalisierungsschema auf der Luftschnittstelle ist dabei in der Figur 8 schematisch dargestellt, wobei die Signalisierung auf der Luftschnittstelle zwischen dem jeweilig zu ortenden Teilnehmergerät und der Basisstation in dessen Aufenthalts-Funkzelle sowie zwei Basisstationen in benachbarten Funkzellen zur erfindungsgemäßen Positionsbestimmung erfolgt.

Im Mobilfunkgerät UE31 wird z.B. durch Anwahl in dessem Serviceteil oder durch entsprechende Tastenbetätigung dessen Keyboards bzw. Tastatur ein Anforderungssignal SS3* für die Positionsermittlung erzeugt. Dieses Anforderungssignal SS3* wird vom Mobilfunkgerät UE31 an die Basisstation BS3 zu einer Aufenthalts-Funkzelle CE3 gesendet. Dies kann insbesondere über den sog. RACH (=Random Access Channel) als Common Channel der Luftschnittstelle in UMTS erfolgen. Alle Mobilfunkgeräte innerhalb derselben Funkzelle benutzen dabei laufend den RACH in Up-Link-Richtung, um der dortigen Basisstation zu signalisieren, ob das jeweilige Mobilfunkgerät mit dieser Basisstation in aktiven Kontakt zur Nutzdatenübertragung treten will. Ist dies der Fall, so wird von der Basisstation ein Verbindungsaufbau zu dem jeweilig anfordernden Mobilfunkgerät eingeleitet und entsprechende Funkkanäle zur Nutzdatenübertragung bereitgestellt.

Aufgrund des Anforderungssignals SS3* im zu ortenden Mobilfunkgerät UE31 hält dieses in mindestens einem Zeitrahmen vorgegebener Struktur, insbesondere nach dem UMTS-TDD-Mode seiner Luftschnittstelle, zum Empfang mindestens eines Meßsignals vorrätig. Mit anderen Worten heißt das, daß das jeweilig zu lokalisierende Mobilfunkgerät während dieses vorreservierbaren Meß-Zeitschlitzes empfangsbereit geschaltet wird, um mindestens einem Meßsignal einer Basisstation zu "lauschen". Für das Mobilfunkgerät UE31 von Figur 2 ist beispielsweise der Meßzeitschlitz SL12 im Zeitrahmen TF5 der Nummer 5 als Meßzeitschlitz vorreserviert, was in der Figur 3 durch Schraffierung angedeutet ist.

Mit Hilfe des Anforderungssignals SS3* wird der Basisstation BS3 in der Aufenthalts-Funkzelle CI3 des Mobilfunkgeräts UE31 mitgeteilt, daß der vorbestimmte Slot SL12 des Zeitrahmens TL5 als Meß-Zeitschlitz im Mobilfunkgerät ausgewählt worden ist. Die Basisstation BS3 in der Aufenthalts-Funkzelle CE3 hält daraufhin ebenfalls für ihre Luftschnittstelle zum Mobilfunkgerät UE31 einen zeitlich entsprechenden Meß-Zeitschlitz ausschließlich für die Ortungsmessung auf Vorrat, d.h. sie stellt in ihrem vorgegebenen Zeitrahmenablauf denjenigene Zeitschlitz ab, der zeitlich betrachtet im wesentlichen deckungsgleich (absolut und relativ) zum Meß-Zeitschlitz SL12 im Mobilfunkgerät UE31 liegt.

Selbstverständlich ist es ggf. auch möglich, daß das Anforderungssignal SS3* zuerst von dem zu lokalisierenden Mobilfunkgerät an die Basisstation BS3 in der Aufenthalts-Funkzelle CE3 übertragen wird, und daraufhin die Vorreservierung eines bestimmten Zeitschlitzes eines bestimmten Zeitrahmens in der Luftschnittstelle dieser Basisstation BS3 eingeleitet wird. Die Bereitstellung eines vorzugsweise zeitlich korrespondierenden Meß-Zeitschlitzes in der Luftschnittstelle des zu lokalisierenden Mobilfunkgerätes UE31 wird dann mittels eines entsprechenden Steuersignals SS3 von der Basisstation BS3 aus eingeleitet. Dieses Steuersignal SS3 ist in der Figur 8 zusätzlich miteingezeichnet. Die Bereitstellung des jeweiligen Meß-Zeitschlitzes im zu ortenden Mobilfunkgerät UE31 wird also zweckmäßigerweise von der Basisstation BS3 in der Aufenthalts-Funk-Zelle CE3 dieses Mobilfunkgeräts veranlasst bzw. generiert.

Die Basisstation BS3 in der Aufenthalts-Funk-Zelle CE3 des zu ortendene Mobilfunkgeräts UE31 steuert nun entweder über den ggf. implementierten Festnetzteil des Funkkommunikationssystems MCS, der hier in den Figuren 1, 2 der Übersichtlichkeit halber weggelassen worden ist, oder über Funk die Basisstation wie z.B. BS1 in einer ersten benachbarten Funkzelle wie z.B. CE1 über ein Steuersignal SS1 an, um dort eine entsprechende Zeitschlitzreservierung, d.h. Vorreservierung eines zeitlich entsprechenden Zeit-Schlitzes in einem zeitlich korrespondierenden Zeitrahmen der Lufttschnittstelle der Basisstation BS1 vornehmen zu lassen.

In analoger Weise weist die Basisstation BS3 der aktuellen Aufenthalts-Funkzelle CE3 des Mobilfunkgerätes UE31 die Basisstation BS2 in der zweiten, benachbarten Funkzelle CE2 unter Zuhilfenahme eines Steuersignals SS2 an. Dadurch wird auch in dem vorgegebenen Zeitrahmen der Luftschnittstelle der Basisstation BS2 derjenige Zeitschlitz für die nachfolgende Ortungsmessung abgestellt bzw. ausgewählt, der im wesentlichen zum selben Zeitpunkt zur Übertragung während des Zeitmultiplexverfahrens ansteht.

Insbesondere im TDD-Mode von UMTS sind die Basisstationen wie z.B. BS1, BS2, BS3 hinsichtlich der zeitlichen Abfolge ihrer Zeitrahmen und ihrer Zeitschlitze zweckmäßigerweise zueinander synchronisiert. Dies hat zur Folge, daß alle Basisstationen zum selben Startzeitpunkt mit der fortlaufenden Durchzählung und Übertragung der Zeitschlitze sowie der aufeinanderfolgenden Zeitrahmen beginnen. Beispielsweise heißt das, daß alle Basisstationen relativ zueinander betrachtet zum selben Zeitpunkt, z.B. den Zeitschlitz SL15 mit der Nummer 15 im Zeitrahmen TF5 der Nummer 5 für eine Kommunikationsverbindung über ihre jeweilige Luftschnittstelle bereithalten.

Auf diese Weise wird sowohl in der Luftschnittstelle des jeweilig zu ortenden Mobilfunkgeräts wie z.B. UE31 als auch für die Basisstation wie z.B. BS3 in dessen momentaner Aufenthalts-Funkzelle wie z.B. CE3, sowie für die Basisstationen wie z.B. BS1, BS2 in mindestens zwei benachbarten Funkzellen wie z.B. CE1, CE2 (die an die Aufenthalts-Funkzelle des jeweiligen Mobilfunkgerätes angrenzen) derselbe Zeitschlitz in der fortlaufenden Abfolge von Zeitrahmen (zeitlich absolut und relativ betrachtet) im wesentlichen zeitgleich, d.h. mit derselben zeitlichen Position bzw. Lage für die Ortungsmessung vorgehalten bzw. bereitgestellt und nicht für die Übertragung sonstiger Daten oder Signale vorbelegt.

Allerdings wird nur ein Teilabschnitt des jeweiligen Meß-Zeitschlitzes für die Übertragung des jeweiligene Meßsignals verwendet. Dadurch bleibt der restliche Teil des jeweiligen Meß-Zeitschlitzes für die Übertragung von Nutzdaten bzw. Nutznachrichtensignale weiterhin zur Verfügung. Auf diese Weise sind Einschränkungen im eigentliche relevanten Nachrichtenverkehr während der Meßsignalübertragung weitgehend vermieden, d.h. die ursprüngliche Kanalkapazität bleibt weitgehend erhalten. Insbesondere wird lediglich derjenige Zeitbereich mindestens eines Zeitschlitzes für die Meßsignalübertragung ausgenützt, der ansonsten für die Übertragung von Kanalschätzparametern vorbelegt wäre. Im UMTS-TDD-Mode ist dies insbesondere der sogenannte Midamble-Block wie z.B. MA beim slot SL12 von Figur 5 zur Übertragung von Kanalschätzparametern im jeweiligen Zeitschlitz (vgl. Figuren 5, 6). Bei mindestens einem Zeitschlitz wie z.B. SL12 in Figur 5 wird also derjenige Zeitbereich wie z.B. MA, der für die Übertragung von Kanalschätzparametern üblicherweise vorbelegt ist, anstelle dessen zum Senden oder Empfangen mindestens eines Meßsignals auf der Übertragungsstrecke zwischen dem jeweilig zu ortenden Teilnehmergerät wie z.B. UE31 von Figur 2 und mindestens einer Basisstation wie z.B. BS1, die der Aufenthaltsfunkzelle CE3 des Tteilnehmergeräts wie z.B. UE3 benachbart ist, bereitgestellt. Nach Übertragung des jeweiligen Meßsignals wird die Midamble-Sektion des jeweiligen Zeit-schlitzes wieder für die Übertragung der Kanalaschätzparameter freigegeben.

Dadurch, daß lediglich diejenige Sektion bzw. derjenige Zeitabschnitt eines Zeitschlitzes für die Meßsignalübertragung genutzt wird, der für die Kanalschätzparameter vorreserviert ist, können in den übrigen Sektionen bzw. Zeitabschnitten wie z.B. DA1, DA2 des jeweiligen Zeit-schlitzes wie z.B. SL12 von Figur 5 Nutzsignale weiterhin im selben Zeitschlitz übertragen werden. Dadurch sind Beeinträchtigungen oder Störungen während der Übermittlung von Nachrichtensignalen aufgrund der zusätzlichen Ortungsmessung weitgehend vermieden.

Diese lediglich zeitweise Benutzung der Midamble-Sektion eines ausgewählten Zeitschlitzes wie z.B. SL12 für die Übertragung mindestens eines Meßsignals ist in den Figuren 7, 8 für die beiden unterschiedlichen Zeitschlitzstrukturen SL12, SL12* dadurch angedeutet, daß dort der jeweilige Midamble-Bereich MA, MA* punktiert ausgefüllt gezeichnet ist. Anstelle von Kanalschätzparametern wird also der Midamble- Bereich des Zeitschlitzes SL12 für die Übertragung des jeweiligen Meßsignals vorbelegt und ausgenutzt. Der vorausgehende Zeitabschnitt DA1 bzw. DA1* sowie der nachfolgende Zeitabschnitt DA2, DA2* der Zeitschlitze SL12, SL12* steht dadurch weiterhin für die Übertragung von Nutzsignalen weitgehend komplett zur Verfügung.

Zur Ortungsmessung des Mobilfunkgeräts UE31 von Figur 2 senden nun die erste der Aufenthaltsfunkzelle CE3 benachbarte Basisstation BS1 und die zweite, der Aufenthaltsfunkzelle CE3 benachbarte Basisstation BS2, im selben, vorab festgelegten Meß-Zeitschlitz wie z.B. hier SL12 jeweils ein Meßsignal LCS1, LCS2 über ihre jeweilige Luftschnittstelle ab (vgl. auch das Signalisierungsschema von Figur 8). Diese Meßsignale werden im weiteren als LCS-Signale (LCS= Location Signal) bezeichnet. Währenddessen ist die Basisstation BS3 der Aufenthalts-Funkzelle CE3 des zu ortenden Mobilfunkgerätes UE31 während des zeitlich korrespondierenden Meß-Zeitschlitzes SL12 im zeitlich korrespondierend ablaufenden Zeitrahmenmuster ihrer Luftschnittstelle zweckmäßigerweise in einen sog. "Idle Modus" gebracht. Dies bedeutet, daß sie während des Meßzeitschlitzes ihrer Luftschnittstelle, die im wesentlichen dieselbe zeitliche Position wie die Meß-Zeitschlitze innerhalb der vorgegebenen, fortlaufenden Zeitschlitzabfolge zum Senden der Meßsignale LCS1, LCS2, in den Luftschnittstellen der benachbarten Basisstationen BS1, BS2 aufweist, sämtliche abgehenden Übertragungen stoppt, d.h. einen Totzeitabschnitt zur Verfügung stellt. Insbesondere wird nur derjenige Teil des Meß-Zeitschlitzes der mindestens zwei benachbarten Basisstationen und/oder der eigenen Basisstation der Aufenthalts-Funkzelle zum Senden und/oder Empfangen mindestens eines Meßsignals zeitweilig belegt, während dem ansonsten Midambles, d.h. Kanalschätzparameter und/oder ein Synchronisationssignal übertragen würden. Dies ist bei der Zeitschlitzstruktur nach dem UMTS-TDD-Mode der sog. Midamble-Zeitabschnitt wie z.B. MA, MA* in Figur 5, bzw. 6. Während dieser festgelegten Midamble-Sektion des vorab festgelegtene Meß-Zeitschlitzes wie z.B. SL12 in Figur 3 (schraffiert dargestellt) ist die Basisstation BS3 der momentanen Aufenthalts-Funkzelle CE3 in diesem Idle-Modus also "stumm" geschaltet. Das zu lokalisierende Mobilfunkgerät UE31 empfängt dann während des vorab ausgewählten Zeitfensters MA bzw. MA* des jeweiligen Meß-Zeitschlitzes, das im wesentlichen dieselbe relative und absolute zeitliche Lage wie die Meßzeit-Fenster der benachbarten, sendenden Basisstationen, BS1, BS2 aufweist, lediglich deren Meßsignale LCS1, LCS2. Da sich während dieses festgelegten Meß-Zeitfensters MA bzw. MA* des ausgewähltene Meß-Zeitschlitzes wie z.B. SL12 die Basisstation BS3 der Aufenthalts-Funkzelle in einer Idle-Periode d.h. in einer Ruhepause befindet, in der sich für die festgelegte Zeitdauer des Midamble-Blocks die Übertragung von Kanalschätzparametern und/oder Synchronisationsparametern zu den ihr zugeordneten Mobilfunkgeräten unterbricht, sind die beiden Meßsignale LCS1, LCS2, der benachbarten Basisstationen BS1, BS2 in den angrenzenden Funkzellen CE1, CE2 vom jeweilig zu ortenden Mobilfunkgerät wie z.B. UE31 ausreichend dedektierbar.

Würde hingegen während des Midamble-Zeitabschnitts dieses festgelegten Meß-Zeitfensters wie z.B. SL12 die Basisstation BS3 uneingeschränkt Signale senden bzw. übertragen, so würde üblicherweise ihr Sendesignal mit erheblich größerer Leistung als die Meßsignale LCS1, LCS2 der benachbarten Basisstationen BS1, BS2 vom Mobilfunkgerät gemessen werden. Denn die Basisstation BS3 der Aufenthaltsfunkzelle CE3 weist zum zu ortenden Mobilfunkgerät UE31 eine kürzere Distanz bzw. Entfernung als die benachbarten Basisstationen BS1, BS2 auf, die den der momentanenen Aufenthalts-Funkzelle CI3 angrenzenden Funkzellen CE1, CE2 zugeordnet sind. Damit wäre ein Meßsignal, das von der eigenen Basisstation abgesendet wird, in der aufgenommenen Überlagerung von ankommenden Signalen beim Mobilfunkgerät dominanter gegenüber den ankommenden Meßsignalen, die von den benachbarten Basisstationen herrühren. Dieses Phänomen wird in der einschlägigen Literatur wie z.B. "CDMA for wireless Personal Communications" R. Prasad: Artech House Publishers, London-Boston; ISBN 0-89006-571-3; 1996 mit "Near-Far-Effect" bezeichnet. Dieser führt dazu, daß das jeweilig zu lokalisierende Mobilfunkgerät wie z.B. UE31 nur die Signale der eigenen Basisstation wie z.B. BS3 in seiner aktuellen Aufenthalts-Funkzelle wie z.B. CI3 detektieren könnte und Signale anderer, weiter entfernt liegender Basisstationen angrenzender Funkzellen wie z.B. CI1, CI2 nicht hören würde, da diese hinsichtlich ihrer Signalleistungen zu schwach wären und ggf. im Rauschen der ankommenden, überlagerten Signale untergehen würden.

Da die beiden benachbarten Basisstationen, BS1, BS2 in räumlicher Entfernung zum zu ortenden Mobilfunkgerät UE31 liegen, treffen ihre Meßsignale LCS1, LCS2 aufgrund ihres jeweilig zurückgelegten Laufwegs jeweils mit einer zeitlichen Verzögerung beim Mobilfunkgerät MP1 gegenüber dem dort intern vorliegenden, festgelegten Zeitschlitz-Raster ein. In der Figur 2 weist beispielsweise die Basisstation BS1 eine Distanz DI11 und die Basisstation BS2 eine Distanz DI21 zum zu ortenden Mobilfunkgerät UE31 auf. Die Zeitverschiebung Δt1* des jeweiligen Meßsignals wie z.B. LCS1 gegenüber dem Zeitschlitzraster im Mobilfunkgerät UE31 veranschaulicht schematisch Figur 4. Entlang der Abszesse ist die Zeit t aufgetragen. Die Startzeitpunkte für die Zeitschlitze bzw. Slots SL11, SL12, SL13 usw. des für die Ortungsmessung ausgewählten Zeitrahmens TF5 in der Luftschnittstelle des Mobilfunkgerätes UE31 sind mit dem zugehörigen Bezugszeichen tI11, tI12, tI13, usw. gekennzeichnet. Dabei ist jeder Zeitschlitz entsprechend der zeitlichen Aufteilung der Zeitschlitz-Strukturen von Figur 5 bzw. 6 aufgeteilt, d.h. allgemein betrachtet weist der jeweilige Zeitschlitz als ersten Übertragungsblock einen Datenblock wie z.B. DA1 auf, dem ein Midamble-Block zur Übertragung von Kanalschätzparamametern folgt. Dem ist ein zweiter Datenblock wie z.B. DA2 nachgeordnet. Am Ende des jeweiligen Zeitschlitzes ist schließlich eine sog. Guard period wie z.B. GP als Totzeit reserviert, um eine zeitliche Entkopplung aufeinanderfolgender Zeit-Schlitze zu erreichen.

Da das Meßsignal LCS1 die Distanz bzw. Strecke DI11 von seiner absendenden Basisstation BS1 bis zum Mobilfunkgerät UE31 mit einer gegebenen, vorzugsweise etwa konstanten Ausbreitungsgeschwindigkeit v durchläuft, kommt es gegenüber seinem absoluten Startzeitpunkt tMA beim Midamble-Beginn im Meß-Zeitschlitz SL12 seiner Basisstation BS1 mit einer Zeitverzögerung Δt1* erst zum Zeitpunkt tLCS1* (= Eintreffzeitpunkt des Meßsignals LCS1) beim Mobilfunkgerät UE31 an. Es gilt also insbesondere die Beziehung tLCS1* = tMA + Δt1*.

Da insbesondere im TDD-Mode des UMTS-Stands die Basisstationen bezüglich der Zeitrahmenstruktur, d.h. der Abfolge der einzelnen Zeitschlitze und deren internen Blockstruktur zweckmäßigerweise zueinander synchronisiert sind (d.h. alle Basisstationen beginnen zur gleichen Zeit mit der Übertragung des Zeitschlitzes SL11, SL12... usw. bis SL25) und der maximale Funkzellenradius vorzugsweise bei ca. 10 Kilometern gewählt ist (d.h. das jeweilige LCS-Signal benötigt für die Strecke von einer Basisstation zur benachbarten Basisstation 66,7 Mikrosekunden) folgt, daß das Mobilfunkgerät UE31 innerhalb eines Slots bzw. Zeitschlitzes (z.B. bei einer Zeitschlitzdauer SP = 666,7 Mikrosekunden) das jeweilige LCS-Signal wie z.B. LCS1, LCS2 der anderen Basistationen wie z.B. BS1, BS2 weitgehend einwandfrei detektieren kann. Denn nur ein kleiner Teil des von einer benachbarten Basisstation BS1 gesendeten LCS-Signals wie z.B. LCS1 rutscht in den für den zweiten Datenblock DA2 vorgesehenen Übertragungs-Zeitabschnitt des ausgewählten Meß-Zeitschlitzes SL12 bzw. SL12*. Der Startzeitpunkt für die Übertragung dieses zweiten Datenblocks DA2 ist in der Figur 4 mit tDA2 bezeichnet. Ein ausreichend langer Zeitabschnitt des ankommmenden Meßsignals wie z.B. LCS1 bleibt also dem vorgegebenen Meß-Zeitfenster tDA2-tMA zur Detektion zugeordnet. Dies ist derjenige Zeitabschnitt, der ansonsten für die Übertragung der Midambles im jeweiligen Zeitschlitz bereitgehalten würde, jetzt aber für die Übertragung des Meßsignals umfunktioniert und abgestellt wird.

Das Mobilfunkgerät UE31 wird hinsichtlich seines Zeit-Schlitz-Rasters zweckmäßigerweise mit der Basisstation BS3 synchronisiert, in deren Funkzelle CE3 es sich momentan aufhält. Dies bedeutet aber, daß das interne Timing (von Slots und Frames) des Mobilfunkgeräts UE31 aufgrund dessen Distanz bzw. Entfernung DI1 zur eigenen Basisstation BS3 zeitverschoben gegenüber deren Timing, d.h. deren Zeitschlitz-Raster ist. Die Zeitverschiebung entspricht dabei der Entfernung des Mobilfunkgeräts UE31 von der Basisstation BS3. Anders betrachtet entspricht somit der Startzeitpunkt TI12 des Meß-zeitschlitzes wie z.B. SL12 im Mobilfunkgerät dem Eintreffzeitpunkt eines gedachten, fiktiven Sendesignals wie z.B. Synchronisationssignals von der eigenen, in der aktuellen Aufenthaltszelle zugeordneten Basisstation BS3. Damit gibt die Zeitdifferenz Δt1* = tLCS1* - tMA in Figur 4 die Zeitverschiebung zwischen dem Eintreffzeitpunk tLCS1* des Meßsignals LCS1 (von der Basisstation BS1 kommend) und dem Eintreffzeitpunkt t12 eines lediglich fiktiven, gedachten Meßsignals LCS1* (von der Basisstation BS3 kommend) beim zu ortendene Mobilfunkgerät UE31 an. Dabei sind sowohl das Meßsignal LCS1, als auch das gedachte Meßsignal LCS1* jeweils zum Startzeitpunkt der Midamblesektion des jeweiligene Meßzeitschlitzes abgesendet worden. Die Zeitdifferenz Δt1* entspricht dabei einer konstanten Laufwegdifferenz Δx1 = v Δt1* zwischen dem Meßsignal LCS1 und dem fiktiven Meßsignal LCS1*, wobei v die Ausbreitungsgeschwindigkeit der Funksignale ist.

Zusammenfassend betrachtet wird vom Mobilfunkgerät UE31 im festgelegten Slot SL12 des festgelegten Zeitraumes TF5 seines internen Zeitschlitzrasters das LCS1-Signal der Basisstation BS1 zum einem Zeitpunkt tLCS1* empfangen, der zeitlich später als der Startzeitpunkt tMA, d.h. dem Startzeitpunkt der Midamble-Sektion des Meß-Zeitschlitzes liegt, so daß eine Zeitdifferenz Δt1* resultiert. Die Zeitdifferenz Δt1* zwischen dem Beginn des Midamble-Zeitabschnitts MA und dem Empfang des LCS1-Signals wird dabei als Auswertesignal OTD1 (vgl. Figur 8) der das Mobilfunkgerät UE31 aktuell bedienenden Basisstation BS3 mitgeteilt. Auf die gleiche Weise wird vorzugsweise innerhalb desselben Midamble-Zeitabschnitts desselben Zeit-schlitzes SL12 im selben Frame TF5 die Zeitdifferenz Δt2* des LCS2-Meßsignals der zweiten, benachbarten Basisstation BS2 zwischen dem Empfangszeitpunkt tLCS2 im Mobilfunkgerät UE31 und dem Startzeitpunkt tMA des Midamble-Zeitabschnitts des Meß-Zeitschlitzes SL12 bestimmt und ebenfalls der Basisstation BS3 in der Aufenthaltszelle CE3 als Auswertesignal OTD2 (vgl. Figur 8) mitgeteilt. Die vom Mobilfunkgerät ermittelten Zeitdifferenzen Δt1*, Δt2* werden beispielsweise über einen aktivierten, d.h. bereits bestehenden Kommunikationskanal der Basisstation BS3 übermittelt.

Mit Hilfe dieser beiden ermittelten Zeitdifferenzen Δt1*, Δt2* sowie den bekannten Ortspositionen der Basisstationen BS1 mit BS3 kann nun die Basisstation BS3 mittels einer zugeordneten Rechen- Auswerteeinheit zwei Hyperbelgleichungen und die beiden möglichen Schnittpunkte der Hyperbeläste dieser Hyperbeln als Ortsangaben für das zu ortende Mobilfunkgerät ermitteln. Denn mit Hilfe der geographischen Daten der Basisstationen BS1, BS2, BS3 können den ermittelten Zeitdifferenzen Δt1*, Δt2* geographische Orte zugewiesen werden. Beispielsweise läßt sich der ermittelten Zeitdifferenz Δt1* durch Umrechnung mit Hilfe der Ausbreitungsgeschwindigkeit V des Meßsignals LCS1 derjenige geographische Ort Δx1* = v Δt1* zuordnen, der von der Basisstation BS1 (z.B. ausgedrückt in Längen- und Breitengraden) und der Basisstation BS3 in der Aufenthaltszelle CI3 des Mobilfunkgeräts UE31 (ebenfalls in Längen- und Breitengraden angegeben) eine konstante Entfernungsdifferenz Δx1* hat. Dabei ist diejenige Menge aller Hyperbeln für die die Differenz der Abstände von zwei gegebenen, festen Ortspunkten - hier den Ortspunkten der beiden Basisstationen BS1 und BS3 konstant ist, in vorteilhafter Weise durch eine Hyperpelfunktion beschreibbar. Die beidene Hyperbelfunktionen lassen sich konkret mittels einer Methode ermitteln, die insbesondere für den UMTS-FDD-Mode in der Spezifikation 3 GTS25.3055: "Stage 2 Functional Specification of Location services in UTRAN", Version 3.1.0 (2000-03) angegeben ist. In der Figur 2 ist jeweils ein Hyperbelast HY11, HY21 der ermittelbaren Hyperbelfunktionen eingezeichnet. Sie schneiden sich in der Aufenthalts-Funkzelle CE3. Es wird also im vorliegenden Ausführungsbeispiel davon ausgegangen, daß die Schnittpunkte der ermittelten Hyperbelfunktionen jeweils in getrennten Funkzellen voneinander liegen. Dadurch ist die Position des Mobilfunkgeräts UE31 eindeutig bestimmbar. Diese Position wird dem Mobilfunkgerät UE31 anschließend über z.B. eine bestehende, aktive Kommunikationsverbindung von der Rechen-Auswerte-Einrichtung in der Basisstation BS3 übermittelt.

Im Fall, daß die beiden Schnittpunkte der Hyperbel in derselben Funkzelle liegen, sind für eine eindeutige Ortsbestimmung des Mobilfunkgeräts weitere Informationen über die Ortslage des Mobilfunkgeräts erforderlich. Dazu könnte zum einen die Zeitdifferenz Δt3* eines weiteren Meßsignals LCS3 einer weiteren, der Übersichtlichkeit halber in Figur 2 nicht eingezeichneten vierten Basisstation bestimmt werden. Als Schnittmenge der drei Hyperbeln ergibt sich dann ein einzelner, gemeinsamer Schnittpunkt in eindeutiger Weise. Dieser gibt dann die eindeutige Ortsposition des Mobilfunkgeräts UE31 an.

Ggf. kann es zweckmäßig sein, die Übertragung der Meßsignale wie z.B. LCS1, LCS2 der mindestens zwei angrenzenden Basis-stationen wie z.B. BS1, BS2 während der Midamble-Zeitabschnitte in unterschiedlichen Zeitschlitzen vorzunehmen. Dadurch ist eine einfache Selektion bzw. Separierung der verschiedenen Meßsignale beim Empfang im zu ortenden Mobilfunkgerät möglich. Insbesondere ist durch die Vorgabe einer zeitlichen Sendeabfolge der Meßsignale deren eindeutige Identifizierung und Zuordnung beim Empfang im Mobilfunkgerät möglich, wenn diesen diese zeitliche Sendecodierung zum Beispiel durch die kontrollierende Basisstation BS3 mitgeteilt wird. Insbesondere können die Meßsignale in den midamble - Sektionen mindestens eines Zeitschlitzes aufeinanderfolgender, verschiedener Zeitrahmen (Frames) übertragen werden. Dadurch wird für den Empfang des jeweiligen Meßsignals pro Zeitrahmen nur ein einziger Midamble-Zeitabschnitt im jeweiligen Meß-Zeitschlitz aus der vorgegebenen Anzahl von Zeitschlitzen pro Zeitrahmen belegt, was pro Zeitrahmen kanalkapazitätseffizient ist.

Ggf. kann es für eine erste, annäherungsweisen Angabe der Ortsposition des jeweiligen Mobilfunkgeräts bereits ausreichend sein, lediglich die Laufzeitdifferenzz wie z.B. Δt1* für ein einziges Meßsignal wie z.B. LCS1 von einer einzigen, benachbarten Basisstation wie z.B. BS1 zu ermitteln. Damit läßt sich zumindest angeben, daß das Mobilfunkgerät eine Ortsposition einnimmt, die sich an irgendeiner Stelle der beiden Äste der ermittelten Hyperbelfunktion befindet.

Oftmals ist eine Mobilfunkzelle aus funktechnischen Gründen zweckmäßigerweise sektorisiert, d.h. sie ist z.B. in drei etwa 120 Grad große disjunktive Raumbereiche, den sog. Sektoren aufgeteilt. Dazu existieren vorzugsweise drei Antennen, welche etwa im 120 Grad Abstand aufgestellt sind und solche Richtcharakteristiken aufweisen, daß sie nur in den ihnen zugeordneten Raumsektoren abstrahlen und empfangen können. Da der Basisstation wie z.B. BS3 bekannt ist, in welchem Sektor sich das Mobilfunkgerät UE31 befindet, kann die Mehrdeutigkeit bei der Positionsbestimmung mit nur zwei Zeitdifferenzmessungen aufgelöst werden. Denn die beiden möglichen Schnittpunkte der beiden ermittelbaren Ortshyperbeln befinden sich im Normalfall nicht im gleichen Sektor. Der Sektor ist der Basisstation in vorteilhafter Weise deshalb bekannt, da durch die Richtcharakteristik der Antennen die Signale, die jede Mobilfunkstation sendet, nur von einer der drei Antennen empfangen wird. Beim Übertragen von Signalen zu jedem Mobilfunkgerät werden die Signale vorzugsweise nur zu derjenigen Antenne geleitet, in deren Raumbereich sich das jeweilige Mobilfunkgerät aufhält. Damit ist der Basisstation BS3 der Aufenthalts-Funkzelle CI3 im groben derjenige Sektor bekannt, wo sich in etwa das jeweilig zu ortende Mobilfunkgerät wie z.B. UE31 aufhält.

Zusätzlich oder unabhängig von der Bestimmung des Aufenthaltsortes des Mobilfunkgerätes UE31 mit Hilfe der Rechen- / Auswerteeinheit der Basisstation BS3 in der Aufenthaltsfunkzelle CI1 kann es ggf. auch zweckmäßig sein, die Positionsbestimmung im Mobilfunkgerät UE31 selbst vorzunehmen. Dazu werden die Daten der Positionen der Basisstationen BS1 mitt BS3 dem Mobilfunkgerät UE31 zweckmäßigerweise übermittelt. Dies kann entweder auf Anforderung des Mobilfunkgeräts UE31 durch ein besonderes Signalisierungssignal geschehen oder generell bei Betreten einer Funkzelle oder durch Verteilen dieser Informationen über den sog. Broadcast Channel BCH erfolgen. Generell dient der Broadcast Channel BCH - insbesondere im UMTS-TD-Mode zum Übermitteln von sog. zellspezifischen Informationen. Der Broadcast Channel ist dabei als sog. Common-Channel ausgebildet, der von allen Mobilfunkgeräten, die sich in der jeweiligen Funkzelle befinden ständig gehört wird. Insbesondere dient der Broadcast-Channel zum Übermitteln von sog. zellspezifischen Informationen wie z.B. Benutzeridentifikationen, Cell-ID's usw. In einer Erweiterung seiner Funktion können in vorteilhafter Weise zu den zellspezifischen Informationen ggf. auch die geographischen Koordinaten der eigenen Basisstation als auch die der umliegenden Basisstationen übermittelt werden. Mit Hilfe dieser Informationen und durch die Zeitdifferenzmessungen kann das Mobilfunkgerät seine eigene Position nach den gleichen, weiter oben beschriebenen Prinzipien bestimmen, wie dies zur Rechen-/ bzw. Auswerteeinrichtung der Basisstation BS3 erläutert worden ist.

Darüberhinaus kann es ggf. zweckmäßig sein, daß es dem jeweiligen Mobilfunkgerät ermöglicht wird, im sog. Idle-Mode eine Positionsbestimmung vornehmen zu können. Im Idle-Mode eines Mobilfunkgeräts besteht keine aktive Kommunikationsverbindung zur Nachrichtensignalübertragung in der Aufenthalts-Funkzelle. Generell betrachtet kann sich ein Mobilfunkgerät in mehrerene Modi befinden. Eine davon ist als Idle-Mode bekannt. In diesem ist das Mobilfunkgerät eingeschaltet, es besteht aber keine aktive Verbindung zur Basisstation. Dies ist beispielsweise dann der Fall, wenn der Benutzer des Mobilfunkgerätes auf einen Anruf wartet. Über mindestens einen, insbesondere mehrere sog. Common-Channels können Daten zwischen Mobilfunkgerät und Basisstation der Aufenthalts-Funkzelle ausgetauscht werden, ohne daß eine aktive Verbindung wie z.B. AC13 bestehen muß. Diese Common-Channels werden oft benutzt, um eine aktive Verbindung aufzubauen. In der Down-Link-Richtung existiert der sog. Foreward-Access-Channel (FACH). Diesen empfangen alle eingeschaltenen Mobilfunkgeräte und versuchen, darin Informationen zu finden, die speziell an sie adressiert sind. Alle anderen Informationen werden üblicherweise ignoriert. Somit kann die Basisstation der jeweiligen Aufenthalts-Funkzelle Daten zu einem bestimmten eingesschaltenen Mobilfunkgerät in ihrer Versorgungs-Funkzelle übertragen, zu dem keine aktive Verbindung besteht. Dies wird z.B. verwendet, um einem bestimmten Mobilfunkgerät mitzuteilen, daß ein ankommender Anruf vorliegt. Umgekehrt existiert der sog. Random-Access-Channel (RACH) als Common-Channel in der Aufwärtsrichtung (Up-Link), damit das jeweilige Mobilfunkgerät Daten an die Basisstation seiner Aufenthalts-funkzelle übertragen kann, falls keine Aktivverbindung besteht. Damit kann das Mobilfunkgerät u.a. der Basisstation in seiner Aufenthaltsfunkzelle mitteilen, daß der Nutzer jemanden anrufen möchte. Diese beiden standardisierten Kanäle RACH, FACH können nun insbesondere auch in folgender Weise benutzt werden:

In einem ersten Fall erfolgt die Berechnung der Ortsposition z.B. des Mobilfunkgeräts UE31 von Figur 2 mit Hilfe der Funktionseinheit bzw. Auswerteeinrichtung der Basisstation BS3 in der Aufenthalts-Funkzelle CI3. Falls die Anfrage nach der Positionsbestimmung durch das Mobilfunkgerät UE31 selbst erfolgt, mißt dieses zuerst die Zeitdifferenzen Δt1*, Δt2* der Meßsignale LCIS1 sowie LCIS2 der benachbarten Basisstationen BS1, BS2. Diese Laufzeitdifferenzen übermittelt das Mobilfunkgerät UE31 zusammen mit der Anfrage nach der Position über den RACH an die Basisstation BS3 in die Aufenthalts-Funkzelle CE3. Nach erfolgter Berechnung der Position in der entsprechenden Funktionseinheit des Funkkomunikationssystems wird die aktuelle, ermittelte bzw. errechnete Position über den FACH an das Mobilfunkgerät UE31 übertragen.

Falls die Anfrage nach der Positionsbestimmung des Mobilfunkgeräts von der Netzwerkseite erfolgt, erhält die Mobilfunkstation UE31 über den FACH die Aufforderung, von der Basisstation BS3 in der Aufenthaltszellee CE3 die benötigten Zeitdifferenzen zu ermitteln. Diese werden dann über den RACH an die Basisstation BS3 übermittelt und stehen dann dort deren zugeordneter Rechen-/Auswerteeinheit zur Positionsbestimmung zur Verfügung.

In einem zweiten Fall erfolgt die Berechnung der Ortsposition im Mobilfunkgerät UE31 in vorteilhafter Weise selber. Sind die Positionen der umliegenden Basisstationen BS1, BS2 dem Mobilfunkgerät UE31 bereits bekannt, wie z.B. über den Broadcast-Channel BCH, ist es nicht erforderlich, eine aktive Verbindung zur Basisstation BS3 in der Aufenthalts-Funkzelle aufzubauen. Andernfalls sendet die Mobilfunkstation UE31 über den RACH eine Anfrage an die Basisstation BS3 nach den geographischen Daten umliegender Basisstationen wie z.B. BS1, BS2. Diese Daten werden dann über den FACH an das Mobilfunkgerät UE31 übermittelt.

Als weitere Variante kann der Datenaustausch im Idle-Mode des Mobilfunkgerätes auch so durchgeführt werden, daß für diesen Zweck eine aktive Verbindung in Form von sog. Dedicated Channels aufgebaut wird.

Als sog. LCS Signal kann insbesondere entweder ein schon vorhandenes Signal des UMTS-TDD-Systems verwendet werden, wie z.B. SCH (= Synchronisation Channel) oder BCH oder es kann ein ähnlich dem CPICH (= Common Pilot Channel) beim FDD-Mode neues Signal beim TDD-Mode eingeführt werden. Denkbar wäre z.B. ein Signal, daß über die Länge eines Midamble-Zeitabschnitts eines herausgegriffenen Slots eine vordefinierte Symbolfolge mit einer konstanten Leistung gesendet wird.

Zweckmäßig ist es insbesondere, daß sich die Häufigkeit der bereit gestellten Midamble-Zeitabschnitte zum Senden und Empfangen von zusätzlichen Meßsignalen danach richtet, wie oft eine Positionsbestimmung des jeweiligen Mobilfunkgeräts überhaupt nötig ist. Dies wird zweckmäßiger Weise über eine geeignete Signalisierung dem benachbarten Basisstationen mitgeteilt. Diese teilen diese Information den Mobilfunkgeräten entweder permanent oder bei Bedarf mit.

Weiterhin ist es ggf. auch möglich, daß das Auftreten von Idle-Midambles und von LCS-Signalen zwischen den eigenen Funkzellen über die Netzinfrastruktur so koordiniert wird, daß beide nur dann eingefügt bzw. gesendet werden, wenn es zu einer Anfrage nach einer Positionsbestimmung z.B. von einer spezifischen Anwendung her kommt.

Weiterhin kann das Funkkommunikationssystem so realisiert werden, daß das jeweilige LCS-Signal nicht in jedem Frame und nicht im midamble- Zeitabschnitt in jedem Zeitschlitz, sondern weniger häufiger übertragen wird. Die Eigenschaften eines solchen LCS-Signals werden zweckmäßiger Weise derart gewählt, daß zum einen eine eindeutige Identifikation der aussenden Basisstation möglich ist; desweiteren ist es zweckmäßig, daß das LCS-Signal ausreichend lang ist, um es mit einer hohen Wahrscheinlichkeit detektieren zu können.

Zusammenfassend betrachtet wird also zur erfindungsgemäßen Positionsbestimmung des jeweilig zu ortenden Teilnehmergeräts während mindestens eines Midamble-Zeitabschnitts, d.h. lediglich während einem Bruchteil mindestens eines vorgegebenen Zeitschlitzes in mindestens einem Zeitrahmen anstelle von Midamble-Parametern mindestens ein Meßsignal übertragen. Es wird also mindestens ein Midamble-Zeitabschnitt der vorgegebenen Slot- und Rahmenstruktur im TDD-Mode eines UMTS-Mobilfunksystems in ein sog. Idle-Midamble-Zeitfenster umfunktioniert. In diesem kann dann mindestens ein Meßsignal gesendet und empfangen werden. Dabei werden in den IdleMidambles von mindestens zwei Basisstationen, die der Aufenthaltszelle des jeweilig zu lokalisierenden Teilnehmer-geräts benachbart sind, jeweils mindestens ein Meßsignal gesendet. Währenddessen ist im zeitlich korrespondierend positionierten Idle Midamble-Zeitfenster der eigenen Basisstation in der Aufenthaltsfunkzelle des zu orten Mobilfunkgeräts eine Ruhephase, d.h. Pause eingefügt. Damit ist es möglich, in den für die Meßsignalübertrag reservierten Idle Midambles der eigenen, das Teilnehmergerät bedienenden Basisstation (Node B) Signale von Basisstationen in Nachbar-Zellen zu detektieren. Denn während dieser Idle Midamble Phase der eigenen Basisstation weist diese eine Übertragungspause auf. Dadurch ist die Gefahr weitgehend vermieden, daß die Meßsignale im leistungsmäßig betrachtet stärkeren Funksignal der eigenen Basisstation untergehen.

Durch die zeitweise Umfunktionierung des Midamble-Zeitfensters des jeweiligen Zeitschlitzes kann auf einfache und zuverlässige Weise die jeweilige Position des jeweilig zu ortenden Teilnehmergeräts bestimmt werden. Zusätzliche Komponenten wie z.B. die eines GPS-Systems, sind nicht erforderlich. Weiterhin sind allzu aufwendige Modifikationen in der bestehenden Signalisierung des Funkkommunikationssystems vermieden. Ein weiterer Vorteil ist der Synergie-Effekt mit dem sog. FDD-Mode im UMTS. Denn das Protokoll für die Signalisierung, für die Anforderung der Positionsbestimmung, für die Übermittlung der Meßergebnisse sowie für die Errechnung der Position bleiben im wesentlichen gleich.

Durch das erfindungsgemäße Meßverfahren werden die Midamble Parameter des jeweiligen, verwendeten Bursts während des jeweiligen Zeitschlitzes nicht gesendet; sie werden sozusagen Idle geschaltet, d.h. nicht übertragen. Durch diese Maßnahme entsteht eine Ruhephase in der Übertragung der Basisstationen zu den Teilnehmergeräten in der jeweiligen Mobilfunkzelle. Dies kann von den Teilnehmergeräten ausgenutzt werden, um in diesen Ruhephasen Meßsignale anderer Basisstationen in den Nachbarzellen zu detektieren. Diese Meßsignale sind zweckmäßigerweise derart ausgebildet, daß sie die Basisstationen, von der die Meßsignale kommen, eindeutig identifizieren können. Auf diese Weise ist es dem jeweilig zu ortenden Teilnehmergerät ermöglicht, ihre Meßsignal-Messungen den umliegenden, benachbarten Basisstationen, zuzuordnen. Solch ein Signal könnte beispielsweise der PSC (= Primary Synchronisation Code) sein. Dieser ist üblicherweise jedem Teilnehmergerät in den Zellen bekannt und wird aufgrund seiner Eindeutigkeit nur dadurch unterschieden, von welcher Basisstation er gesendet wurde, indem er mit einem gewissen zeitlichen Versatz (Offset) versehen wird.

Mit diesen Informationen lassen sich nach der OTDOA-Methode (observed time difference of arrival-idle period downlink) Meßsignallaufzeiten in den Idle-midamble Zeitfenstern ermitteln, die an die sog. PCF (= Position Calculation Function) der bedienenden Basisstation übertragen, die die Positionsberechnung für das jeweilig zu ortende Teilnehmergerät aufgrund der Berechnung von Hyperbeln möglich macht.

Um zu erreichen, daß trotz fehlender Midamble- Parameter während der Meßsignalübertragung der jeweilige Kanalschätzer im Empfänger der jeweilig bedienenden Basisstation und/oder des jeweiligen Teilnehmergeräts im aktuellen Moment der Meßsignalübertragung trotzdem richig arbeitet, d.h. eine weitgehend zuverlässige Übertragung ohne aktuelle Midamble-Parameter möglich ist, sind folgende Maßnahmen zweckmäßig:
- Für den Kanalschätzer im Empfänger des jeweiligen Teilnehmergeräts und/oder der jeweiligen Basisstation werden bei der Übertragung des jeweiligen Meßsignals die Kanalschätzparameter mindestens eines zeitlich vorausgehenden, regulären Zeitschlitzes verwendet.
- Weiterhin kann es zweckmäßig sein, daß bei der Übertragung des jeweiligen Meßsignals für den Kanalschätzer im Empfänger des jeweils zu ortenden Teilnehmergeräts und/oder der dieses bedienenden Basisstation Durchschnittswerte der vorausgehenden Kanalschätzparameter verwendet werden.
- Ggf. kann es auch ausreichend sein, bei der Übertragung des jeweiligen Meßsignals für den Kanalschätzer im Empfänger des jeweilig zu ortenden Teilnehmergeräts und/oder dessen zugeordneter Basisstation als Kanalparameter vordefinierte Default-Werte für eine nicht-gesendete oder Idle-Mitamble verwendet werden.
- Weiterhin kann es ggf. auch ausreichend sein, daß bei der Übertragung des jeweiligene Meßsignals lediglich mindestens die übliche Kanalkodierung und/oder mindestens ein Interleaving durchgeführt wird. Dabei wird ein Schätzfehler akzeptiert und auf die Fähigkeiten der Kanalcodierung und/oder des Interleavers vertraut.

Eine weitere Möglichkeit zur Ortsbestimmung des jeweiligen Mobilfunkgeräts besteht ggf. darin, daß mindestens ein Meßsignal von dem jeweilig zu ortenden Mobilfunkgerät an mindestens eine Basisstation in einer benachbarten Funkzelle geschickt wird, die deren Auswertung veranlasst. Allgemein ausgedrückt kann also das vorstehende Ortungsverfahren ggf. auch durch Umkehr der Senderichtung für die Meßsignale durchgeführt werden. Die Basisstationen benachbarter Funkzellen nehmen dabei die vom Mobilfunkgerät gesendeten Meßsignale auf, ermitteln deren Laufzeiten und geben diese zur weiteren Auswertung z.B. an die Basisstation in der Aufenthaltsfunkzelle des Mobilfunkgerätes weiter.

Um eine Positionsbestimmung eines Mobilfunkgeräts insbesondere innerhalb von UMTS durchführen zu können, sind in der UMTS Spezifikation 3G TS 25.305 V3.1.0 "Stage 2 Functional Specification of Location services in UTRAN" (Release 99), mehrere LCS Methoden (Location Services) angegeben. Dazu gehört zum einen die sog. Cell ID-Based Methode, bei der als Aufenthaltsort eines Mobilfunkgeräts nur die von einer Basisstation versorgte Funkzelle angegeben werden kann. Dies ist für die meisten Einsatzzwecke allerdings zu ungenau. Desweiteren sind Network-Assistant Methoden möglich. Diese überlassen jedoch die Positionsbestimmung dem bekannten Standart GPS Verfahren. Dazu wäre es erforderlich, daß im jeweiligen Mobilfunkgerät jeweils ein GPS-Empfänger vorhanden ist, was aufwendig wäre. Als weiteres wird im UMTS Standard die sog. OTDOA-IPDL-Methode (= Observed Time difference of Arrival-Idle-Period DownLink) angegeben. Diese bisher nur im FDD-Mode von UMTS praktikable Methode verwendet zur Positionsbestimmung ausschließlich Signale, die in der Luftschnittstelle von UTMS spezifiziert sind. Jede Basisstation im FDD-Mode sendet dabei kontinuierlich auf dem sog. CPICH (= Common Pilot Channel) einen bestimmten Burst, d.h. ein Meßsignal, der u.a. für eine Kanalschätzung im Mobilfunkgerät verwendet wird und dessen Inhalte bekannt sind (vordefinierte Symbolfolge mit bestimmten Eigenschaften). Die OTDOA-IPDL-Methode im FDD-Mode setzt nun voraus, daß das jeweilige Mobilfunkgerät bzw. die jeweilige Mobilstation den CPICH von unterrschiedlichen Basisstationen aus benachbarten Zellen empfangen kann. Damit dies auch in den Zellbereichen möglich ist, in denen sich das jeweilige Mobilfunkgerät nahe an der Basisstation innerhalb der aktuellen Aufenthaltszelle befindet, werden für eine kurze Zeit (= Idle period) sämtliche Übertragungen von dieser Basisstation eingestellt. Das Mobilfunkgerät mißt nun die Zeitdifferenzen zwischen dem Burst auf dem CPICH (= CommonPilot-Channel), der Aufenthaltszelle und dem Burst auf den CPICH's von benachbarten Basisstationen. Aus diesen Zeitdifferenzen und dem Wissen, wann die einzelnen Symbolfolgen gesendet wurden und den geographischen Positionen der einzelnen Basisstationen bestimmt die sog. Position Calculation Funktion (= PDF) die z.B. im Serving RNC (Radio Network Controller) angesiedelt ist, den Aufenthaltsort des Mobilfunkgeräts.

In den aktuellen Spezifikationen des UMTS-Standarts ist jedoch bisher für den sog. TDD-Mode keine geeignete Ortungsmethode gefunden oder gar angegeben worden. Dies bedeutet, daß die Positionsbestimmung des jeweiligen Teilnehmergeräts sehr unpräzise, z.B. mit der Cell-ID-Based Methode oder mit erheblichem Mehraufwand im Mobilfunkgerät (zusätzlicher GPS-Empfänger bei GPS-Based Methoden) verbunden wäre. Die direkte Übertragung der OTDOA-IPDL-Methode des FDD-Mode auf den TDD-Mode ist nicht möglich, da es im TDD-Mode den sog. CPICH des FDD-Modes überhaupt nicht gibt. Die Aufgabe des CPICH besteht nämlich darin, bekannte Symbolfolgen für die Down-Link-Kanalentzerrung zu übertragen. Dies bedeutet, daß der Common-Pilot-Channel in jedem Slot zwingend übertragen werden müßte. Ein solcher Extrakanal ist im TDD-Mode nicht notwendig und somit überhaupt nicht vorgesehen, da in jedem TDD-Burst (dieser wird in einem Slot übertragen) sog. Midambles mitübertragen werden. Mit deren Hilfe erfolgt u.a. die Kanalentzerrung oder auch Synchronisation in ausreichender Weise. Eine Einführung des CPICH im TDD-Mode würde zu einer signifikanten Reduktion der Kanalkapazität im Down-Link führen, da für diesen in jedem Slot ein Teil, insbesondere 1/16 der Gesamtkapazität für den CPICH benötigt würde.

Der UMTS-Standart enthält für den FDD-Mode also zusammenfassend betrachet drei Varianten zur Positionsbestimmung des jeweiligen Mobilfunkgeräts.

Nach einer ersten Variante wird eine Positionsbestimmung anhand der Erkennung der Mobilfunkzelle, in der sich das Mobilfunkgerät zum Zeitpunkt der Positionsanfrage bzw. -bestimmung befindet, durchgeführt. Diese Art der Positionsbestimmung ist abhängig von der Größe der Mobilfunkzelle und erlaubt somit lediglich eine grobe Positionsbestimmung.

Nach einer zweiten Variante im FDD-Mode von UMTS kann eine Positionsbestimmung mit aktiver Unterstützung des sog. GPS-Systems (GlobalPositioningSystem) durchgeführt werden. Dabei enthält das jeweilig zu ortende Teilnehmergerät einen hinsichtlich der Funktionsfähigkeit modifizierten GPS-Empfänger zum Empfang der GPS-Signale von mindestens 3 Sateliten. Die Auswertung der Empfangssignale übernimmt ein separater Server, der mit einem kompletten GPS-Empfänger ausgestattet ist, in der Funkzelle des jeweilig zu lokalisierenden Teilnehmer-geräts. Die damit erreichbaren Genauigkeiten in der Positionsangabe des jeweilig zu lokalisierenden Teilnehmergeräts liegen derzeit nur bei ca. 20 Metern.

Nach einer dritten Variante kann die Positionsbestimmung im FDD-Mode von UMTS nach der sog. OTDOA-IPDL-Methode durchgeführt werden. Dabei werden die Empfangszeiten eines bekannten Meßsignals wie z.B. CPICH (CommonPilotChannel) - ausgesendet von mindestens zwei unterschiedlichen, benachbarten Basissstationen, an dem jeweilig zu lokalisierenden Teilnehmergerät bestimmt werden. Der Meßzeitpunkt des Empfangssignals im Teilnehmergerät findet dabei in einer Ruheperiode (Idle period) der dieses Teilnehmergerät bedienenden Basisstation statt. Ruhepause bedeutet, daß die Basisstation in der Aufenthalts-Funkzelle des Teilnehmergeräts für eine vorher festgelegte Zeit, d.h. mehrere Symbole lang (1 Symbol = 246 Chip, 1 Chip = ca. 0,26 µsec) unterbricht, d.h. ihre Übertragungen werden während dieser Idealperiode zu den ihr zugeordneten Mobilfunktelefonen in ihrer Funkzelle gestoppt. Dies ermöglicht dem jeweilig zu ortenden Teilnehmergerät, die Signale anderer, um seine Aufenthaltszelle örtlich gelegenen Basis-stationen angrenzender Mobilfunkzellen zu detektieren. Hintergrund ist, daß die das Teilnehmergerät bedienende Basis-station bei uneingeschränkter Übertragung während des Detektionszeitpunkt der Meßsignale anderer Basisstationen, diese durch ihre eigene starke Leistung und Nähe zur lokalisierenden Teilnehmerstation beeinflüssen würde (sog. Near-Far-Effekt). Das würde dazu führen, daß das zu lokalisierende Teilnehmergerät lediglich die Signale der eigenen Basisstation detektieren würde und die Meßsignale anderer, benachbarter Basisstationen nicht hören würde, was allerdings für eine Positionsbestimmung unzureichend wäre.

Mit der Kenntnis der Empfangszeitpunkte des z.B. CPICH-Signals unterschiedlicher Basisstationen im FDD-Mode von UMTS (mit Ausnahme der das Teilnehmergerät bedienenden Basisstation), vorzugsweise mindestens 2, kann das Teilnehmergerät diese Informationen auswerten und an eine Position Calculation Funktion, die z.B. im RNC (RadioNetworkController vgl. Figur 1) angesiedelt ist, senden. Auswerten heißt, daß das Teilnehmergerät die Differenz der Empfangszeiten des z.B. CPICH Signals bildet. Daraus läßt sich folgern, daß sich der Aufenthaltsort des Teilnehmergeräts mit Sichtweise auf die zwei benachbarten Basisstationen auf einer Hyperbel liegt. Durch die Einbeziehung einer weiteren Basisstation befindet sich der Aufenthaltsort des Teilnehmergeräts an einem der beiden Schnittpunkte der beiden ermittelbaren Hyperbeln. In der Regel ist zur eindeutigen Bestimmung des Aufenthaltsort des jeweiligen Teilnehmergeräts noch eine weitere Information zweckmäßig. So kann entweder a) eine OTDOA zu einer vierten Basisstation bestimmt werden, oder b) in Zellen mit Sektorisierung kann die Information über den Sektor, in der sich das Mobilfunkgerät befindet, oder c) mittels RTT-Messung (RoundTripTime) kann der Aufenthaltsort des Teilnehmergeräts zur Ortspräzisierung herangezogen werden.

Der aktuelle UMTS-Standard, Release 99-Stand 03/2000 enthält für den TDD-Mode keine ausreichend einfache und zuverlässige Methode zur Positionsbestimmung des jeweiligen Teilnehmergeräts. Eine Positionsbestimmung im TDD-Mode ist nur sehr grob aufgrund der Cell-ID, d.h. der Zugehörigkeit zu einer Mobilfunkzelle, und einer eventuell vorhandenen Sektorinformation möglich. Somit ist die Genauigkeit der Positionsbestimmung eines Mobilfunktelefons zur Zeit abhängig von der Größe der Mobilfunkzelle und der Sektorisierung dieser entsprechenden Mobilfunkzelle. Eine weitere Möglichkeit der groben Positionsbestimmung kann mittels der Messung des sog. Timing Advance erfolgen. Dabei erfolgt die Berechnung der Entfernung eines Teilnehmergeräts zur zugeordneten Basisstation aus einer RTD-Messung (RX-Timing deviation). Die Berechnung ergibt dann eine Kreisangabe um die Basisstation, auf der sich das jeweilige Teilnehmergerät befinden kann- zum Zeitpunkt der Messung. Die Genauigkeit liegt hierbei allerdings lediglich bei ca. 280 Metern. Ein solcher Meßkreis RTDK ist in der Figurr 2 um die Basisstation BS1 gezeichnet.

Gegenüber diesen bekannten Methoden zur Positionsbestimmung zeichnet sich die erfindungsgemäße Meßmethode insbesondere dadurch aus, daß sie sich wesentlich einfacher und zuverlässiger in das bestehende Zeitrasterschema und Signalisierungsprotokoll des UMTS-TDD-Modes integrieren läßt.

## Patentansprüche

1. Verfahren zur Positionsbestimmung (PO1) mindestens eines Teilnehmergeräts (UE11) eines Funkkommunikationssystems (MCS), das eine Vielzahl von Basisstationen (BS1, BS2) zur Aufteilung in zugeordnete Funkzellen (CE1, CE2) aufweist, und in dem Nachrichtensignale (LS111) über mindestens eine vordefinierte Luftschnittstelle zwischen dem jeweiligen Teilnehmergerät (UE11) und mindestens einer der Basisstationen (BS1) im Zeitmultiplexverfahren übertragen werden, wobei bei diesem Zeitmultiplexverfahren zur Teilnehmerseparierung die Nachrichtensignale auf eine Vielzahl von aufeinanderfolgenden Zeitschlitzen (SL11 mit SL25) verteilt werden, wobei jeder Zeitschlitz (SL11) nochmals in mehrere Zeitbereiche (DA1, MA, DA2, GP) unterteilt wird, und wobei mindestens einer dieser Zeitbereiche (DA1, MA, DA2, GP) jedes Zeitschlitzes (SL11) zur Übertragung von Kanalschätzparametern vorbelegt wird,
**dadurch gekennzeichnet,**
**dass** bei mindestens einem Zeitschlitz (SL11) derjenige Zeitbereich (MA), der für die Übertragung von Kanalschätzparametern vorbelegt ist, anstelledessen zum Senden und/oder Empfangen mindestens eines Messsignals (LCS1) auf der Übertragungsstrecke zwischen dem jeweilig zu ortenden Teilnehmergerät (UE11) und mindestens einer Basisstation (BS1), die der Aufenthalts-Funkzelle (CE1) des Teilnehmergeräts (UE11) benachbart ist, bereitgestellt wird,
und **daß** die Laufzeit (Δt1) dieses Messsignals (LCS1) für seinen Laufweg zwischen der jeweiligen Basisstation (BS1) und dem jeweilig zu lokalisierenden Teilnehmergerät (UE11) ermittelt sowie zur Auswertung bereitgestellt wird.

2. Verfahren nach Anspruch 1
**dadurch gekennzeichnet,**
**dass** jeweils mindestens ein Meßsignal (LCS1, LCS2) an das jeweilig zu lokalisierende Teilnehmergerät (UE11) von mindestens zwei Basisstationen (BS1, BS2) gesendet wird, die der Aufenthalts-Funkzelle (CE1) des Teilnehmergeräts (UE11) benachbart sind.

3. Verfahren nach einem der vorgegebenen Ansprüche,
**dadurch gekennzeichnet,**
**dass** während der Messsignalübertragung die Basisstation (BS1), die der Aufenthalts-Funkzelle (CE1) des Teilnehmergeräts (UE11) zugeordnet ist, in eine Ruhephase gebracht wird.

4. Verfahren nach einem der vorgegebenen Ansprüche,
**dadurch gekennzeichnet,**
**dass** dem jeweiligen Messsignal (LCS1) ein eindeutiger Identifizierungscode derart zugeordnet wird, dass das zu lokalisierende Teilnehmergerät (UE11) das empfangene Messsignal in eindeutiger Weise einer der Basisstationen (BS1, BS2) in einer der benachbarten Funkzellen (CE1, CE2) zuordnen kann.

5. Verfahren nach einem der vorgegebenen Ansprüche,
**dadurch gekennzeichnet,**
**dass** das Funkkommunikationssystem im UMTS-TDD-Mode betrieben wird.

6. Verfahren nach Anspruch 5,
**dadurch gekennzeichnet,**
**dass** als jeweiliges Messsignal (LCS1) der Primary-Synchronisation-Code im UMTS-TDD-Standard gewählt wird.

7. Verfahren nach einem der vorgegebenen Ansprüche,
**dadurch gekennzeichnet,**
**dass** die Basistationen (BS1, BS2), die der Basisstation (BS3) in der Aufenthaltszelle des jeweiligen Teilnehmergeräts (UE11) benachbart sind, zu einander synchronisiert werden.

8. Verfahren nach einem der vorhergehenden Ansprüchen,
**dadurch gekennzeichnet,**
**dass** für den Kanalschätzer im Empfänger des jeweiligen Teilnehmergerät (UE11) bei der Übertragung des jeweiligen Messsignals (LCS1) die Kanalschätzparameter mindestens eines zeitlich vorausgehenden Zeitschlitzes verwendet werden.

9. Verfahren nach einem der vorhergehenden Ansprüchen,
**dadurch gekennzeichnet,**
**dass** bei der Übertragung des jeweiligen Messsignals (LCS1) für den Kanalschätzer im Empfänger des jeweilig zu ortenden Teilnehmergeräts (UE11) Durchschnittswerte der vorausgehenden Kanalschätzparameter verwendet werden.

10. Verfahren nach einem der vorhergehenden Ansprüchen,
**dadurch gekennzeichnet,**
**dass** bei der Übertragung des jeweiligen Messsignals (LCS1) für den Kanalschätzer im Empfänger des jeweilig zu ortenden Teilnehmergeräts (UE11) als Kanalschätzparameter vordefinierte Default- Werte verwendet werden.

11. Verfahren nach einem der vorhergehenden Ansprüchen,
**dadurch gekennzeichnet,**
**dass** bei der Übertragung des jeweiligen Messsignals (LCS1) lediglich mindestens eine Kanalcodierung und/oder mindestens ein interleaving durchgeführt wird.

12. Verfahren nach einem der vorhergehenden Ansprüchen,
**dadurch gekennzeichnet,**
**dass** als Teilnehmergerät ein Mobilfunkgerät, insbesondere Handy, verwendet wird.

13. Verfahren nach einem der vorhergehenden Ansprüchen,
**dadurch gekennzeichnet,**
**dass** als Laufzeitkriterium des jeweiligen Messsignals (LCS1) dessen zeitliche Verschiebung (Δt1) gegenüber dem Zeitraster der vorgegebenen Zeitschlitzabfolge der Luftschnittstelle des jeweilig zu ortenden Teilnehmergeräts (UE11) herangezogen wird.

14. Verfahren nach einem der vorhergehenden Ansprüchen,
**dadurch gekennzeichnet,**
**dass** das jeweilige Teilnehmergerät (UE11) bezüglich dem Zeitraster seiner Zeitschlitzabfolge durch die ihm in seiner Aufenthalts-Funkzelle (CE3) zugeordneten Basistation (BS3) synchronisiert wird.

15. Vorrichtung zur Positionsbestimmung mindestens eines Teilnehmergeräts eines Funkkommunikationssystems, das nach einem der vorhergehenden Ansprüche betrieben wird.
